Europäisches Patentamt

European Patent Office

Office européen des brevets

(11) Publication number: **0 531 620 B1**

# EUROPEAN PATENT SPECIFICATION

(45) Date of publication of patent specification: **15.11.95**

(51) Int. Cl.⁶: **B01D 53/08**, B01D 46/34, B01J 8/12, B01D 53/34

(21) Application number: **92108092.5**

(22) Date of filing: **13.05.92**

(54) **Separation of pollutants from flue gas of fossil fuel combustion and gasification.**

(30) Priority: **26.08.91 US 749782**

(43) Date of publication of application:
**17.03.93 Bulletin 93/11**

(45) Publication of the grant of the patent:
**15.11.95 Bulletin 95/46**

(84) Designated Contracting States:
**CH DE FR GB IT LI**

(56) References cited:
**EP-A- 0 174 109**
**EP-A- 0 370 623**
**WO-A-89/07974**
**DE-A- 2 254 162**
**DE-C- 339 692**

(73) Proprietor: **WESTINGHOUSE ELECTRIC COR-PORATION**
**Westinghouse Building**
**Gateway Center**
**Pittsburgh**
**Pennsylvania 15222 (US)**

(72) Inventor: **Yang, Wen-Ching**
**236 Mount Vernon Avenue**
**Export,**
**Pennsylvania 15632 (US)**
Inventor: **Newby, Richard Allen**
**149 Spring Grove Road**
**Pittsburgh,**
**Pennsylvania 15235 (US)**
Inventor: **Lippert, Thomas Edwin**
**3205 Cambridge Road**
**Murrysville,**
**Pennsylvania 15668 (US)**

(74) Representative: **Fleuchaus, Leo, Dipl.-Ing. et al**
**Melchiorstrasse 42**
**D-81479 München (DE)**

**Description**

This invention relates to the separation of pollutants from the high temperature, high pressure (HTHP) gas created by combustion of fossil fuel, predominantly in the generation of power for public consumption or in gasification of coal. In particular, this invention relates to such separation effected by a moving granular-bed filter (MGBF). Typical of the power generation system to which this invention may be adapted are pressurized fluid-bed combustion (PFBC), integrated coal gasification combined cycle (IGCC) and direct coal-fueled turbines (DCFT).

Moving granular-bed filters are composed of pellets which are packed tightly and move at a rate of about between 10 times and 40 times of the flow of solids in the flue gas. Under different operating modes, there may be lower bed flow rates. Typically, the voidage in the MGBF is about 50%.

The bed media are pellets of alumina ($Al_2O_3$) or other compounds which are chemically stable at the temperature at which the operation takes place. Alumina pellets and pellets of other types are costly and to operate at a reasonable cost, it is necessary that the pellets be recycled through the bed. This necessity introduces design complexity, demands an unreasonable large plant and militates against sound and reliable operation. In addition, the demand for recycling carries with it the requirement for bed media cleaning and recycling, wear of the lift pipe which returns the pellet, media, i.e., pellet, degradation and makeup, lift gas recompression, penalties in temperature and pressure drop and pressure balancing.

It is an object of this invention to provide a method which overcomes the above-described drawbacks and disadvantages of the prior art and to provide for the separation, free of the complexities and demands of the prior art, of pollutants from gas created from the combustion of fossil fuel which serves for driving power converters such as generators.

With this object in view the present invention resides in a method of separating pollutants from gas generated in fossil-fuel combustion or gasification, in which ash is produced, in a moving granular-bed filter, wherein reactants for converting said pollutants into filterable particulate and atmospheric gas are supplied, to said filter so as to provide for reaction of certain of said pollutants with said reactants in the bed of said filter to convert said certain of said pollutants into filterable particulate material and atmospheric gas, and said particulate material is filtered out in said bed filter to produce a processed gas substantially free of particulate material whereupon said processed gas is conducted away, the flyash contained in the flue gas generated during combustion or gasification is separated by a cyclone and is combined with the ash produced directly from the combustion, said combined ash being thereafter pelletized into agglomerates of substantially increased volume, said agglomerates being fed into the moving granular-bed filter to form the moving granular bed, which moving bed is discarded after passage through the granular-bed filter.

Since the ash is expendable, it need not be recycled, i.e., each batch passes through the bed only once and is followed by a new batch. The complexities and problems of the recycling of the media are thus eliminated. In addition, because the ash is pelletized, the dust problems in handling are reduced, the ash volume is reduced by about 25% and the resistance to leaching is improved.

The ash is typically removed from the bottom of the combustor or gasifier in which the combustion takes place. In addition, the gas, on its way to the power converters, passes through one or more cyclones which separates out particulate, for example, fly ash. The ash from the bottom of the combustor or gasifier and the ash from the cyclone or cyclones are combined to act as the bed media for the MGBF. The ash is pelletized into larger agglomerates and then filtered out into each moving granular-bed filter module. The pelletization is necessary in the usual practice of this invention because, if the bed is formed of small particles, the processed gas would entrain the particles. The pollutants in the gas depend on the fossil fuel which is combusted or gasified. As disclosed in application Serial No. 07/703,327, filed May 20, 1991 to Richard A. Newby, et al. for Separation of Pollutants in the Incineration of Municipal Solid Waste, the pollutants contained in the gas include predominantly hydrochloric acid, hydrofluoric acid, sulfur oxides, nitrogen oxides, carbon monoxide and flyash. The flyash contains unburned carbon and mineral matter; alkali vapors may also be present. Combustion of coal or oil may create gas with all of these pollutants. In the case of gasifiers, there would usually be hydrogen sulfide instead of sulfur oxides. In the practice of this invention, sorbents and catalyzers, sometimes herein referred to as "reactants", are added to convert the pollutants into solid particulate, which can be filtered out in the moving granular-bed filter modules, and atmospheric gases. Typically, the sulfur oxides are converted into solid sulfates and the nitrogen oxides are decomposed in the presence of catalysts into atmospheric gas, nitrogen and oxygen. The carbon monoxide is oxidized into carbon dioxide. The flyash is to an extent oxidized, the remainder is captured in the bed. In the practice of this invention, the sorbents and catalysts are added to the ash in the pelletizers, but they may be added to the ash separately or directly to the modules.

For treating the gas effectively to separate pollutants, each module includes a vessel in accordance with this invention having a dipleg and a standleg. The pelletized ash is supplied through the dipleg to the standleg. The dipleg penetrates into a frustro-conical member which extends from or near the upstream end of the pelletized-ash-inlet of the standleg. From the outlet of the standleg, the pelletized ash flows into a hopper and thence out as waste. The vessel has a gas inlet which is positioned to circulate the gas in the vessel circumferentially and a gas outlet for the clean gas. Preferably, the inlet opens near the top of the module. The dipleg is of substantial length to suppress back-flow of the gas. The vessel has a hopper for receiving the spent pelletized ash, the converted solids and the flyash from the standleg, discharging these components as waste. The rate of flow of the spent ash and the other components from the hopper is controlled by a water-cooled rotary valve or a screw feeder. The valve or screw feeder controls the flow so that the bed is built up to present an effective surface and volume for the treatment of gas. As the pelletized ash flows out of the dipleg, it builds up in the frustro-conical member to a mass having a frustro-conical surface and, as it flows out of the standleg, it also builds up a mass with a frustro-conical surface. The particulate generated from the pollutants predominantly deposits on the upper frustro-conical surface and the clean gas flows out through the lower frustro-conical surface. The frustro-conical surface below the down-stream (outlet) end of the standleg is of substantially greater area than the surface at the above upstream end of the standleg, providing a large area for the discharge of clean or processed gas. Since the pelletized ash is continually removed, the necessity of cleaning the bed of pollutant deposit is dispensed with. In cold-flow simulation tests to determine the efficacy of the standleg-MGBF which were carried out in connection with the invention, a removal efficiency of 97% was achieved for particulate which in the test was flyash.

In the practice of this invention, the moving granular-bed filter module may be operated continuously or intermittently. The bed is closely packed having a voidage of 50% or less. The particulate, resulting from the reaction of the pollutants with the reactants and the flyash, is trapped on the surfaces of the pellets which form the bed producing a dust surface. As the feed of gas continues, cake builds up on this surface. In the continuous operation, the cake is progressively carried away in the moving bed. The discontinuous operation involves a valve at the outlet of the hopper (or vessel). The valve is normally closed, but it opens in response to the increase in pressure drop produced by the dust on the pellets of the bed.

The invention will become more readily apparent from the following description of a preferred embodiment thereof showing by way of example only, in the accompanying drawings, in which:

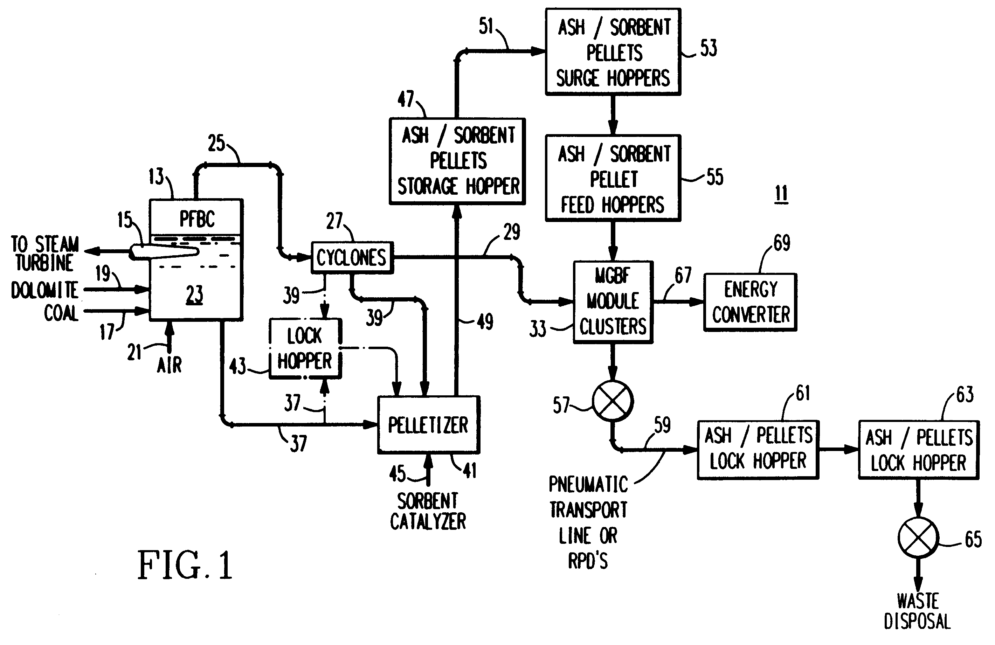

Figure 1 is a flow block diagram showing an embodiment of this invention and illustrating the practice of the method of this invention;

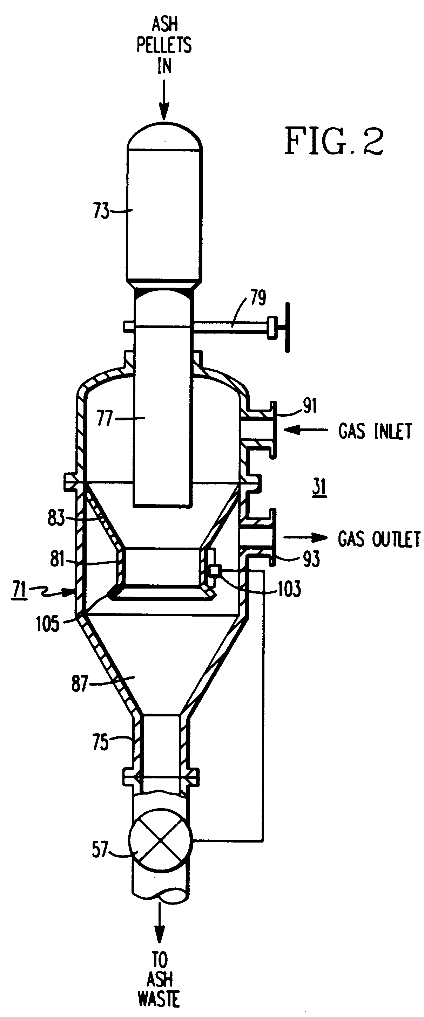

Figure 2 is a view in side elevation and partially in section of a module for creating a moving granular-bed filter in accordance with this invention and for the practice of the method of this invention;

Figure 3 is a view similar to Figure 2 but showing the moving granular-bed filter; and

Figure 4 is a view in side elevation, generally diagrammatic, showing the adaptation of this invention to pressurized fluid-bed combustion.

In the power-generating apparatus 11 shown in the drawings, the primary energy source is a boiler 13 from which flue gas created typically by pressurized fluid-bed combustion of fossil fuel is derived. The boiler 13 is representative of any source for generating the flue gas which, in actual practice, may be a combustor or a coal gasifier. The heat developed in the boiler 13 may also serve to generate superheated steam for driving steam turbines in steam lines 15. Crushed coal, pulverized dolomite and air are supplied to the boiler by conductors 17, 19 and 21 respectively. The dolomite forms the fluid bed 23 and serves the additional purpose of removing the sulfur oxides at least in part from the coal. The boiler 13 typically operates at a temperature of 843.3°C (1550°F) and at a pressure of $10^6$ Pa Ash from the combustion is deposited in the bottom of the boiler 13.

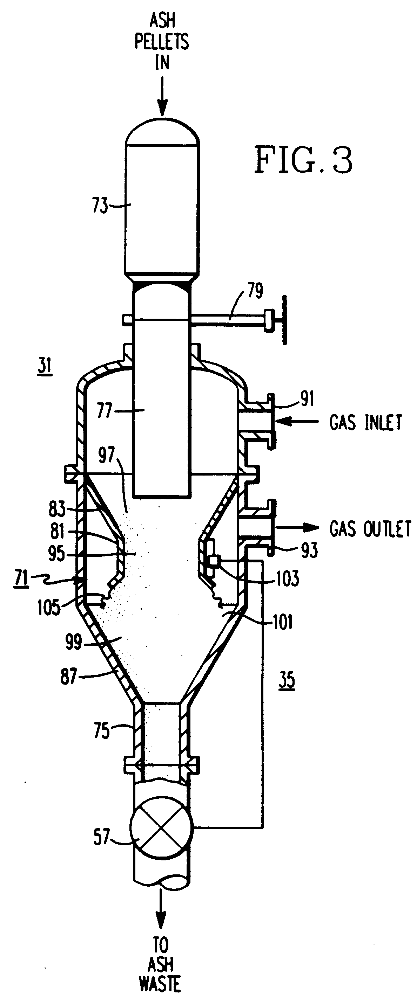

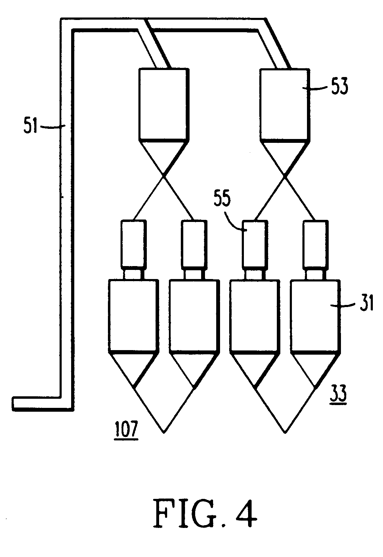

In the typical use of the PFBC boiler, the flue gas is conducted by conductor 25 to cyclones 27 which remove a substantial portion of the flyash. From the cyclones 27, the flue gas is fed by conductors 29 to the moving granular-bed filter modules 31, which are arrayed in cluster 33 (Fig. 4). The ash derived from the cyclones 27 is combined with the ash deposited in the bottom of boiler 13 to serve after pelletization as the bed 35 (Fig. 3) in each of the modules 31.

The ash from the cyclones 27 and the bottom of boiler 13 are fed by conductors 37 and 39 into a pelletizer 41 which mechanically compresses the small particles of the ash into larger pellets. The ash pellets, as compressed, may be generally spherical or cylindrical and typically have a diameter of about 6350 μm (1/4 inch)

In the practice of this invention, it may be necessary to carry out the pelletization under atmospheric pressure. To achieve this purpose, the ash from the bottom of the boiler 13 and the ash from the cyclones 27 are fed to the pelletizer 41 through a lock hopper 43 (shown in broken lines) in the conductors 37 and 39. Sorbents and catalyzers are fed into the pelletizer 41 through conductor 45. While the feeding of the sorbents and catalyzers into the pelletizer 41 has unique advantages, the sorbents may also be fed through other parts of the apparatus 11, e.g., directly into the modules 31.

The pellets from the pelletizer 41 are fed into a storage hopper 47 through conductor 49. Thence they are fed by conductor 51 into surge hoppers 53 which stabilize the flow of ash pellets by providing surge capacity. Thence the pellets are fed through feed hoppers 55 into the moving granular-bed filter modules 31. In the instant apparatus with the PFBC boiler 13, shown in Fig. 4, there are four clusters 33 of four modules 31 each (only two modules for each cluster 33 shown). Each cluster 33 is fed through a surge hopper 53 and each module 31 is fed through a feed hopper 55. Where the pelletizers 41 operate at atmospheric pressure, the surge hopper 53 and feed hopper 55 are lock hoppers which serve to repressurize the pellets as they flow from the bed 35 in the moving granular-bed filter module 31.

The flow of the bed through the module 31 is controlled by a water-cooled rotary valve 57 (or a screw feeder). The pellets passed by the valve 57 are fed by a pneumatic transport line or restricted pipe discharge 59 to lock hoppers 61 and 63 which operate to depressurize them. From lock hopper 63, the pellets are discharged to waste disposal under the control of a valve 65. Pneumatic transfer and restricted pipe discharge systems are conventional. The processed gas is discharged by the filter module 31 through conductor 67 to drive an energy converter 69 such as turbines. The discharged gas is referred to as "processed" gas to preclude any issue as to whether the gas is entirely clean.

The moving granular-bed filter module 31 in accordance with this invention will now be described. This module includes a gas-tight vessel 71 of circular transverse cross-section having ash pellet feed hopper 73 and an outlet 75. The pellets flow from the feed hopper 73 into a dipleg 77 under the control of a slide valve 79 which has only fully open and fully closed settings. From the dipleg 77, the pellets flow into a standleg 81 to form the bed 35 (Fig. 3). A frustro-conical member 83 extends from or near the upstream end of standleg 81. The dipleg 77 extends into the frustro-conical member 83. From the standleg 81, the pellets flow into a hopper 87 and thence out through the outlet 75 under the control of valve 57.

The vessel has an inlet 91 which opens near the top of the vessel and feeds the gas tangentially. The vessel also has an outlet 93 which opens opposite the standleg 81. The dipleg is of substantial length to preclude the back flow of the gas.

The flow of the pellets is shown shaded in Fig. 3. As the pellets flow from the dipleg 77 into the standleg 81, a mass 95 of the pellets is built up in the frustro-conical member 83. This mass has a surface 97 of generally frustro-conical shape. The angle of the surface to the horizontal (with reference to Fig. 3) is equal to the angle of repose of the pellets as they build up in the frustro-conical member 83. Below the member 83, the pellets flow through the standleg 81 and build up above the hopper 87 in a mass 99 having a frustro-conical surface 101 of substantially greater area than the surface 97. The gas entering through the gas inlet 91 sweeps around the surface 97, penetrating through the pellets below the surface and moving concurrently downwardly with the bed. The purpose of the frustro-conical member is to produce the surface 97 so that the incoming gas is afforded a substantial area to react with the pellets of the moving bed. The particulate produced by the reaction of the pollutants with the reactants and the residual flyash in the gas is captured and builds up on the frustro-conical surface 97. The resulting gas passes through the bed giving up any residual particulate to the pellets and as clean gas exits through the larger frustro-conical surface 101 and through the outlet 93 as processed gas substantially free of pollutants. The processed gas is fed to the energy converter 69. As the gas passes from the frustro-conical member 83 into the standleg 81 of smaller diameter, its velocity is increased.

The bed 35 may flow continuously or intermittently. For intermittent flow, the valve 57 may be operated responsive to a pressure drop measuring device 103. The valve 57 is normally closed. As the particulate builds up on the surface 97, the pressure drop of the gas as it passes through the bed increases. At a predetermined pressure drop, the valve 57 is opened and the pellet bed and the captured particulate discharges through the valve. The valve 57 then recloses and the particulate again builds up. The appropriate surfaces 97 and 101 are maintained by the feed of pellets through the dipleg 77.

The gas flow concurrently with the moving bed 35 and is uniformly distributed across the cross-section of the bed. In addition, the frustro-conical surface 101 formed naturally below the standleg 81, resulting from the angle of repose of the ash pellets, is a surface of large area (compared to the cross-sectional area of the standleg) facilitating the passage of the gas. These factors minimize the tendency of the moving bed below the standleg to become fluidized. No fluidization was observed in cold flow tests conducted at a standleg face velocities up to 4.02 m/s (13.4 ft/s) with stone chips as the bed media with a minimum fluidization velocity of 1.83 m/s (6.1 ft/s)

In accordance with an aspect of this invention, a screen 105 extends from or near the downstream (lower) rim of the standleg at the angle of repose of the pellets which form the surface 101. The screen 105 extends only a relatively short distance along the surface 101. Typically, up to 20% of the area of the surface 101 may be screened. The area of the holes in the screen 105 is smaller than the largest cross-sectional area of the pellets. The processed gas flows freely through the screen 105. The screen precluded fluidization of the bed 35. Since the screen 105 extends only over the upper portion of the surface 101, the flow of processed gas through the surface 101 continues even in the unlikely event that the screen becomes plugged.

Table I presents the principle data involved in the adaptation of this invention to a pressurized fluid-bed combustion plant (American Electric Power-Sporn), coal gasifier plant (operated by KRW), and direct coal-fueled turbine plant, each operating at 330 megawatt electrical power.

<u>TABLE I</u>

| | | PFBC (AEP Sprorn) | Coal Gasifier (KRW) | DCFT (W/AVCO) |
|---|---|---|---|---|
| Plant Capacity | (MWe) | 330 | 330 | 330 |
| Gas Temperature | °C | 843 | 649 | 1010 |
| | °F | (1550) | (1200) | (1850) |
| Pressure | (Pa) | 1,482,269.64 | 2,033,793.59 | 1,254,854.27 |
| | (g/cm²) | 15.115 | 20.739 | 12.796 |
| | (psia) | (215) | (295) | (182) |
| Gas Flow | (kg/s) | 364,27 | 132,64 | 1,012.40 |
| | (kg/hr) | 1,311,364 | 477,515 | 3,644,649 |
| | (lb/hr) | (2,885,000) | (10,505,532) | (8,018,227) |
| | (m³/min) | 4,679 | 1,244 | 17,710 |
| | (acfm) | (165,240) | (43,927) | (625,422) |
| Flyash Flow | (kg/s) in the gas | 0.18 to 0.91 | 0.30 | 0.51 |
| | (kg/hr) | 655 to 3,278 | 1,085 | 1,818 |
| | (lb/hr) | 1,442 to 7,212 | 2,388 | 4,000 |
| | (ppmw) | 500 to 2,500 | 2,272 | 500 |
| Bottom Ash Flow | (kg/s) | 3.57 | 5.05 | |
| | (kg/hr) | 12,843 | 18,182 | |
| | (lb/hr) | (28,255) | (40,000) | |
| Cyclone Catch | (kg/s) | 5.28 to 4.55 | 4.52 | 7.30 (slag) |
| | (kg/hr) | 19,015 to 16,392 | 16.288 | 26.285 |
| | (lb/hr) | (41,832 to 36,062) | (35,833) | (57,826) |
| Solid Waste | (kg/s) | 9,03 | 9,88 | 7,81 |
| | (kg/hr) | 32.513 | 35.555 | 28.103 |
| | (lb/hr) | (71,529) | (78,221) | (61,826) |
| BGBF Media Flyash Ratio | | 48.6 to 8.9 | 31.8 | 14.5 |
| Maximum Pressure Drop | (Pa) | 34,519.28 | 34,519.28 | 34,519.28 |
| | (gm/cm²) | 352 | 352 | 352 |
| | (psi) | (5) | (5) | (5) |
| Maximum Temperature Drop | °C | 2.2 | 8.3 | 5.6 |
| | °F | (4) | (15) | (10) |
| Particle Remove Efficiency | % | 95 to 99 | 99 | 98 |
| Maximum Outlet Dust Loading | (ppmw) | 25 | 69 | 9 |

While Table I is confined to removal of flyash, certain pollutants in the gas, e.g., sulfur oxides, are converted into solids by the sorbents in the ash in the practice of this invention and they are also removed by the bed 35.

In plant operation, the bottom ash and cyclone catch from PFBC and coal gasifier are collected and pelletized in the pelletizer 41 to a diameter of about 6350 μm (approximately 1/4 inch) to serve as the media for the moving granular-bed filter. However, if the fraction of ash particles larger than 6350 μm diameter is small, simple screening before pelletization may be feasible. During the pelletization step,

6

sorbents and catalysts are incorporated into the pellets for pollutant removal. The total cyclone catch in the PFBC plant ranges from 16,392 to 19,015 kg/hr (36,062 to 41,832 lb/hr) , depending on the cyclone efficiency. This gives a MGBF media ash ratio of 8.9 to 48.6, assuming all the bottom ash and cyclone catch are pelletized to provide the bed media for the MGBF (Table I). In the case of KRW coal gasifier, the ratio is 31.8. These ratios are well within the desired range of bed material/particulate ratio, 10 to 40, employed experimentally in cold-flow simulation tests. In fact, if the moving bed is operated intermittently to allow a thin particulate layer to build up on the bed surface, the MGBF media/flyash ratio can even be smaller.

In the case of DCFT plants, the quench slag is already in granular frit form, simple screening at system pressure may be employed to recover the desirable size fraction to use as the moving bed media. No depressurization of ash frits and repressurization of bed media are required.

Several options are available in ash handling and pelletization for MGBF media. An alternative is to reduce the pressure to the atmospheric pressure from the pressure in boiler 13 and to perform necessary screening, pulverization (if required), and pelletization of ash pellets at atmospheric pressure. The ash pellets are then transported either pneumatically or mechanically to the lock hoppers to be repressurized for feeding into the MGBF. Alternatively, pelletization can be carried out under hot and/or pressurized conditions.

For pellet transport, both mechanical and pneumatic transport can be employed. Conventional lock hopper systems can be utilized to pressurize the pellets for feeding into the MGBF. Conventional lock hopper system can also be used for media pressure reduction. Alternatively, the concept of restricted pipe discharge system (RPDS) developed by the Institute of Gas Technology, under sponsorship of DOE, can be employed for continuous depressurization of solids.

Table II presents typical dimensions for the modules 31 and the associated surge hoppers 53 and feed hoppers 55 for 330 MWe PFBC, coal gasification and DCFT plants.

TABLE II

| | | PFBC (AEP Sporn) | Gasifier (KRW) | DSGT (W/AVCO) |
|---|---|---|---|---|
| **S-MGBF:** | | | | |
| Standleg 81 Dia. 1 | (m) | 1,8 | 1,8 | 1,8 |
| | (ft) | (6) | (6) | (6) |
| Standleg Ht. | (m) | 0,9 | 0,9 | 0,9 |
| | (ft) | (3) | (3) | (3) |
| Dipleg 77 Dia. | (m) | 1,2 | 1,2 | 1,2 |
| | (ft) | (4) | (4) | (4) |
| Dipleg Ht. | (m) | 1,2 | 1,2 | 1,2 |
| | (ft) | (4) | (4) | (4) |
| Vessel 71 Dia. | (m) | 4 | 4 | 4 |
| | (ft) | (13) | (13) | (13) |
| Vessel Ht. | (m) | 9,1 | 9,1 | 9,1 |
| | (ft) | (30) | (30) | (30) |
| No. of Modules 31 | | 16 | 4 | 36 |

| | | | | |
|---|---|---|---|---|
| **Pellet Feed Hopper 55** | (Fig. 4): | | | |
| Vessel Dia. | (m) | 1,5 | 1,5 | 1,5 |
| | (ft) | (5) | (5) | (5) |
| Vessel Ht. | (m) | 4,6 | 4,6 | 4,6 |
| | (ft) | (15) | (15) | (15) |
| No. of Modules | | 16 | 4 | 36 |

| | | | | |
|---|---|---|---|---|
| **Pellet Surge Hopper 53** | (Fig. 4): | | | |
| Vessel Dia. | (m) | 3 | 3 | 3 |
| | (ft) | (10) | (10) | (10) |
| Vessel Ht. | (m) | 7,6 | 7,6 | 7,6 |
| | (ft) | (25) | (25) | (25) |
| No. of Modules | | 4 | 1 | 9 |

Table II shows that sixteen modules 31 are required for the 330 MWe PFBC plant. The sixteen modules are arranged in four clusters 107 (Fig. 4) of four modules each. The complete ash stream from the PFBC is processed through four separate ash pelletizers 41 (not shown in Fig. 4) feeding the four ash pellet surge hoppers 53, one for each cluster. Each ash pellet surge hopper 53 is typically 3 m (10 feet) diameter and about 7.5m (25feet) high, and has a capacity three times the hourly pellet flow. The transfer of ash pellets to these hoppers can either be mechanical or pneumatical. An important consideration for the selection of transport system is to minimize the attrition and decrepitation of ash pellets. Because all plant ash is pelletized, the ash waste from the plant is in pellet form which facilitates handling and disposal.

Every single ash pellet surge hopper feeds four lock hoppers 53 (only two shown in Fig. 4) located on top of the four MGBF modules. The dimensions of each ash pellet feeding lock hopper is 1.5 m (5 feet) in diameter and 4.6 m ( 15 feet ) high. The feed hoppers are always maintained at the system pressure, while the ash pellet surge hoppers cycle between the system pressure and the atmospheric pressure. From the lock hoppers, the ash pellets are fed into the MGBF through a 1.2m (4 foot) dipleg 77 (not shown in Fig. 4) by gravity.

The complete standleg-MGBF system for the PFBC plant can be erected in a 18 m (60 foot) by 18 m (60 foot) plot with a maximum height of slightly over 30 m (100 feet).

EP 0 531 620 B1

For the 330 MWe KRW gasifier, one cluster of four MGBF modules 31 is required. In the case of DCFT plant, nine clusters with a total of 36 standard MGBF modules 31 are needed because of substantially higher gas flow rate.

| IDENTIFICATION OF REFERENCE NUMERALS USED IN THE DRAWINGS | | |
|---|---|---|
| LEGEND | REF. NO. | FIGURE |
| PFBC | 13 | 1 |
| CYCLONES | 27 | 1 |
| MGBF MODULE CLUSTERS | 33 | 1 |
| PELLETIZER | 41 | 1 |
| LOCK HOPPER | 43 | 1 |
| ASH/SORBENT PELLETS STORAGE HOPPER | 47 | 1 |
| ASH/SORBENT PELLETS SURGE HOPPERS | 53 | 1 |
| ASH/SORBENT PELLET FEED HOPPERS | 55 | 1 |
| ASH/PELLETS LOCK HOPPER | 61 | 1 |
| ASH/PELLETS LOCK HOPPER | 63 | 1 |
| ENERGY CONVERTER | 69 | 1 |

## Claims

1. A method of separating pollutants from gas generated in fossil-fuel combustion or gasification, in which ash is produced, in a moving granular-bed filter, wherein reactants for converting said pollutants into filterable particulate and atmospheric gas are supplied to said filter so as to provide for reaction of certain of said pollutants with said reactants in the bed of said filter to convert said certain of said pollutants into filterable particulate material and atmospheric gas, and said particulate material is filtered out in said bed filter to produce a processed gas substantially free of particulate material whereupon said processed gas is conducted away, the flyash contained in the flue gas generated during combustion or gasification is separated by a cyclone and is combined with the ash produced directly from the combustion, said combined ash being thereafter pelletized into agglomerates of substantially increased volume, said agglomerates being fed into the moving granular-bed filter to form the moving granular bed, which moving bed is discarded after passage through the granular-bed filter.

2. A method according to claim 1, characterized in that said reactants comprise sorbents and catalysts which are injected into the ash while it is being pelletized.

3. A method according to claim 1 or 2, wherein the combustion or gasification of fossil fuel takes place under pressure substantially higher than atmospheric pressure, characterized in that, prior to pelletizing of the ash, the pressure of the ash is reduced substantially to atmospheric pressure and the pressure is re-established before producing of the filter bed.

4. A method according to any of claims 1 to 3, wherein the moving granular-bed filter is a standleg granular-bed filter module, said module having a dipleg in granule-transfer relationship with a standleg; characterized in that the bed of the granular-bed filter is formed by advancing granules through said dipleg into and through said standleg and out of said module.

5. A method of claim 4, wherein the pollutants in the flue gas include flyash, characterized in that the bed is moved intermittently through the module and is stopped repeatedly until a predetermined quantity of the products of the reaction of the reactants and the pollutants and flyash in the flue gas builds up in the bed and it is then advanced in response to the predetermined build-up of said products and said flyash and stopped repeatedly after said products have passed out of said module.

6. The method of claim 5, characterized in that the advancing is triggered by the increase of the pressure drop to a predetermined magnitude caused by the build-up of the products.

9

**7.** A method of claim 5 or 6, characterized in that as the granules are advanced through the dipleg into and through the standleg they form a first frustro-conical surface upstream from the standleg and a second frustro-conical surface downstream from the standleg, the particulate in the gas being captured by the first frustro-conical surface and the gas without the captured particulate being conducted through said second frustro-conical surface.

**8.** A method according to claim 7, characterized in that the second frustro-conical surface is maintained substantially greater in area than the first frustro-conical surface.

**Patentansprüche**

**1.** Ein Verfahren zur Abtrennung von Schadstoffen aus Gas bei der Verbrennung oder Vergasung fossiler Brennstoffe, bei der Asche entsteht, in einem beweglichen Granulatfilterbett, in dem Reaktanden zur Umwandlung der Schadstoffe in filtrierbare Partikelmaterie und atmosphärisches Gas diesem Filter zugeführt werden, so daß gewisse Schadstoffe mit den Reaktanden im Bett dieses Filters reagieren um gewisse Schadstoffe in filtrierbare Partikelmaterie und atmosphärisches Gas umzuwandeln, und die filtrierbare Partikelmaterie in diesem Filterbett ausgefiltert wird und ein behandeltes Gas erzeugt, das im wesentlichen frei von Partikelmaterie ist, woraufhin das behandelte Gas abgeleitet werden kann, die in dem während der Verbrennung oder Vergasung erzeugten Rauchgas enthaltene Flugasche durch einen Zyklon abgetrennt und mit der direkt aus der Verbrennung entstehenden Asche kombiniert wird, wobei diese kombinierte Asche danach in Agglomerate von im wesentlichen erhöhten Volumen pelletisiert wird, wobei diese Agglomerate zur Bildung des beweglichen Granulatbetts in das bewegliche Granulatfilterbett eingeführt werden, dessen bewegliches Bett nach Passieren durch den Granulatbettfilter ausgesondert wird.

**2.** Ein Verfahren gemäß Anspruch 1, dadurch gekennzeichnet, daß die Reaktanden Sorptionsmittel und Katalysatoren beinhalten, die während der Pelletisierung in die Asche eingespritzt werden.

**3.** Ein Verfahren gemäß Anspruch 1 oder 2, wobei die Verbrennung oder Vergasung fossiler Brennstoffe unter Druck stattfindet, der im wesentlichen höher als der atmosphärische Druck ist, dadurch gekennzeichnet, daß vor der Pelletisierung der Asche der Aschedruck auf im wesentlichen den atmosphärischen Druck reduziert und der Druck vor Erzeugung des Filterbetts wiederhergestellt wird.

**4.** Ein Verfahren gemäß einem der Ansprüche 1 bis 3, wobei das bewegliche Granulatfilterbett ein Standbein-Granulatfilterbett-Modul ist, wobei dieses Modul ein Tauchbein in Granulat-Übertragungsbeziehung mit dem Standbein aufweist, dadurch gekennzeichnet, daß das Bett des Granulatbettfilters durch Vorschieben des Granulats durch das Tauchbein in, und durch das Standbein aus dem Modul gebildet wird.

**5.** Ein Verfahren gemäß Anspruch 4, wobei die Schadstoffe im Rauchgas Flugasche enthalten, dadurch gekennzeichnet, daß das Bett mit Unterbrechungen durch das Modul bewegt wird und wiederholt angehalten wird, bis sich eine vorgegebene Menge Reaktionsprodukte der Reaktanden, Schadstoffe und Flugasche im Rauchgas im Bett aufbaut und dann in Reaktion auf eine vorgegebene Menge dieser aufgebauten Produkte und der Flugasche vorgeschoben und wiederholt angehalten werden, nachdem diese Produkte das Modul verlassen haben.

**6.** Das Verfahren gemäß Anspruch 5, dadurch gekennzeichnet, daß der Vorschub durch die Zunahme des Druckabfalls auf eine vorgegebene Größenordnung, bewirkt durch den Aufbau der Produkte, ausgelöst wird.

**7.** Ein Verfahren gemäß Anspruch 5 oder 6, dadurch gekennzeichnet, daß beim Vorschub des Granulats durch das Tauchbein in und durch das Standbein diese stromaufwärts vom Standbein eine erste kegelstumpfförmige Oberfläche, und stromabwärts von Standbein eine zweite kegelstumpfförmige Oberfläche bilden, wobei die Partikelmaterie im Gas von der ersten kegelstumpfförmigen Oberfläche aufgefangen wird und das Gas ohne die aufgefangene Partikelmaterie durch die zweite kegelstumpfförmige Oberfläche geleitet wird.

8. Ein Verfahren gemäß Anspruch 7, dadurch gekennzeichnet, daß die zweite kegelstumpfförmige Oberfläche im wesentlichen auf einer größeren Ausdehnung gehalten wird als die erste kegelstumpfförmige Oberfläche.

**Revendications**

1. Procédé pour séparer, dans un filtre mobile à lit granulaire, des produits polluants de gaz engendrés lors de la combustion ou de la gazéification d'un combustible fossile dans laquelle des cendres sont produites, dans lequel on amène audit filtre des réactifs destinés à convertir lesdits produits polluants en des particules filtrables et du gaz atmosphérique, de façon à produire la réaction de certains desdits produits polluants avec lesdits réactifs dans le lit dudit filtre, afin de convertir ces certains produits polluants en une matière formée de particules filtrables et en gaz atmosphérique, et ladite matière formée de particules est éliminée par filtrage dans ledit filtre à lit afin de produire un gaz traité qui est sensiblement exempt de matière formée de particules, après quoi on évacue ledit gaz traité, on sépare au moyen d'un cyclone les cendres volantes contenues dans les gaz de fumée qui sont engendrés pendant la combustion ou la gazéification, et on les combine avec les cendres qui sont directement produites par la combustion, cependant que l'on soumet ensuite lesdits cendres combinées à un bouletage donnant des agglomérés dont le volume est sensiblement augmenté, et que l'on introduit lesdits agglomérés dans le filtre mobile à lit granulaire pour former le lit granulaire mobile, ce lit mobile étant mis au rebut après le passage à travers le filtre à lit granulaire.

2. Procédé selon la revendication 1, caractérisé par le fait que lesdits réactifs comprennent des absorbants et des catalyseurs que l'on injecte dans les cendres pendant qu'on les soumet à un bouletage.

3. Procédé selon la revendication 1 ou 2, dans lequel la combustion ou la gazéification du combustible fossile a lieu sous une pression qui est sensiblement supérieure à la pression atmosphérique, caractérisé par le fait qu'avant le bouletage des cendres, on réduit la pression des cendres sensiblement jusqu'à la pression atmosphérique et on rétablit la pression avant la production du lit de filtrage.

4. Procédé selon l'une quelconque des revendications 1 à 3, dans lequel le filtre mobile à lit granulaire est un module à branche verticale de filtrage à lit granulaire, ledit module comprenant une branche plongeante en relation de transfert des granules avec la branche verticale, caractérisé par le fait que l'on forme le lit du filtre à lit granulaire en faisant avancer des granules à travers ladite branche plongeante dans ladite branche verticale, à travers celle-ci et hors dudit module.

5. Procédé selon la revendication 4, dans lequel les produits polluants contenus dans les gaz de fumée comprennent des cendres volantes, caractérisé par le fait que l'on déplace le lit par intermittence à travers le module et qu'on l'arrête de façon répétée jusqu'à ce qu'une quantité prédéterminée des produits de réaction des réactifs, des produits polluants et des cendres volantes dans les gaz de fumée soit formée dans le lit, puis qu'on le fait avancer en réponse à la formation prédéterminée desdits produits et desdites cendres volantes, et qu'on l'arrête de façon répétée après que lesdits produits sont sortis dudit module.

6. Procédé selon la revendication 5, caractérisé par le fait que l'avancement est déclenché par l'augmentation de la chute de pression jusqu'à une valeur prédéterminée causée par la formation des produits.

7. Procédé selon la revendication 5 ou 6, caractérisé par le fait que, pendant que l'on fait avancer les granules à travers la branche plongeante, dans la branche verticale et à travers celle-ci, ils forment une première surface tronconique en amont de la branche verticale et une deuxième surface tronconique en aval de la branche verticale, les particules contenues dans le gaz étant capturées par la première surface tronconique et le gaz exempt des particules capturées étant conduit à travers ladite deuxième surface tronconique.

8. Procédé selon la revendication 7, caractérisé par le fait que l'aire de la deuxième surface tronconique est maintenue à une valeur sensiblement supérieure à celle de la première surface tronconique.

FIG.1

EP 0 531 620 B1

ASH
PELLETS
IN

FIG.2

GAS INLET

31

GAS OUTLET

71

TO
ASH
WASTE

FIG.3

ASH
PELLETS
IN

73

79

31

77

91

GAS INLET

97

83
81
95
71
105

93

103
101

99
87

35

75

57

TO
ASH
WASTE

GAS OUTLET

FIG. 4